# FASCICULE DE BREVET EUROPEEN

(11) **EP 1 369 285 B1**
(45) Date de publication et mention de la délivrance du brevet: **28.10.2009**
(21) Numéro de dépôt: 03354051.9
(22) Date de dépôt: 04.06.2003
(51) Int. Cl.: B60W 10/04, F02N 11/08, F02N 17/00, F02N 17/08, B60W 20/00, B60L 11/12

(54) **Procédé et dispositif de démarrage d'un moteur thermique dans un véhicule hybride série**
Verfahren und Vorrichtung zum Anlassen einer Brennkraftmaschine eines seriellen Hybridfahrzeugs
Method and apparatus for starting an internal combustion engine in a serial hybrid vehicle

(30) Priorité: 05.06.2002 FR 0206917
(43) Date de publication de la demande: 10.12.2003
(73) Titulaire: Peugeot Citroën Automobiles SA, 78943 Vélizy-Villacoublay Cedex (FR)
(72) Inventeur: Prou, Jean-Michel, 92250 La Garenne Colombes (FR); de Wulf, Grégory, 75006 Paris (FR)
(74) Mandataire: Ménès, Catherine

(56) Documents cités:
- EP-A- 1 101 649
- EP-A- 1 151 892
- US-A- 6 018 199
- US-A- 6 098 584
- US-B1- 6 335 574

## Description

La présente invention concerne un procédé et un dispositif de démarrage d'un moteur thermique d'un véhicule hybride série.

Un véhicule hybride série comporte un moteur thermique couplé en série avec une machine électrique. Le moteur thermique et la machine électrique peuvent fournir chacun un couple sur l'arbre du moteur thermique pour l'entraînement des roues du véhicule.

La machine électrique est reliée à une batterie. Alimentée par la batterie, la machine électrique se comporte comme un moteur électrique et fournit un couple qui s'ajoute au couple du moteur thermique. La machine électrique peut également fournir un couple qui s'oppose au couple du moteur thermique. Elle se comporte alors comme un alternateur, charge la batterie et fournit le réseau de bord.

La machine électrique assiste le moteur thermique dans ses différentes phases de fonctionnement et permet d'améliorer les prestations du moteur thermique et globalement de diminuer la consommation en carburant du moteur thermique. En particulier, le moteur thermique est généralement démarré au moyen de la machine électrique. Par exemple, la machine électrique peut entraîner en rotation l'arbre du moteur thermique jusqu'à un régime déterminé. A ce moment, un calculateur de contrôle de l'injection du moteur thermique commande une injection maximale de carburant dans les chambres de combustion du moteur thermique, puis régule l'injection pour que le régime du moteur thermique se stabilise à un régime de ralenti.

Au démarrage du moteur thermique, celui-ci présente un couple résistif qui diminue lorsque la température du moteur thermique augmente. A titre d'exemple, pour un moteur diesel classique, pour des températures proches de -25°C, on peut atteindre des couples résistifs de l'ordre de 200 Nm.

La publication EP 1 101 649 A2 décrit le démarrage d'un moteur en sélectionnant entre la machine électrique et un démarreur.

Pour des températures faibles, la batterie alimentant la machine électrique peut ne plus fournir la puissance nécessaire pour que la machine électrique produise un couple suffisant pour l'entraînement du moteur thermique. Dans ce cas, le démarrage du moteur thermique peut être compromis.

La présente invention vise à proposer un procédé et un dispositif de démarrage du moteur thermique permettant d'assurer le démarrage du moteur thermique aux faibles températures.

Pour atteindre cet objet, la présente invention prévoit un procédé de démarrage d'un moteur thermique d'un véhicule hybride, ledit moteur thermique étant susceptible de fournir un couple moteur à un arbre moteur relié aux roues du véhicule, une machine électrique étant couplée à l'arbre moteur et fournissant un couple d'assistance à l'arbre moteur de même sens ou opposé au couple moteur, comportant les étapes consistant à comparer une température représentative de la température du moteur thermique à un premier seuil ; et entraîner le moteur thermique par la machine électrique, si la température représentative est supérieure au premier seuil, ou par un démarreur distinct de la machine électrique, si la température représentative est inférieure au premier seuil,

le procédé comprenant en outre les étapes consistant à comparer la température représentative à un second seuil, inférieur au premier seuil ; et alimenter le démarreur par une première batterie, si la température représentative est inférieure au second seuil, ou par l'association de la première batterie et d'une seconde batterie, normalement dédiée à l'alimentation de la machine électrique, si la température représentative est comprise entre le second seuil et le premier seuil.

Selon un mode de réalisation de l'invention, le premier seuil dépend du sens de variation de la température représentative.

Selon un mode de réalisation de l'invention, le second seuil dépend du sens de variation de la température représentative.

Selon un mode de réalisation de l'invention, la température représentative est la température d'un liquide de refroidissement du moteur thermique.

La présente invention prévoit également un véhicule hybride comprenant un moteur thermique susceptible de fournir un couple moteur à un arbre moteur relié aux roues du véhicule, et une machine électrique couplée à l'arbre moteur et fournissant un couple d'assistance audit arbre moteur de même sens ou opposé au couple moteur, comportant un démarreur pouvant être couplé temporairement à l'arbre moteur, un moyen de détermination d'une température représentative de la température du moteur thermique, et un moyen de sélection adapté à sélectionner, pour entraîner l'arbre moteur lors du démarrage du moteur thermique, la machine électrique si la température représentative est supérieure à un premier seuil, ou le démarreur si la température représentative est inférieure au premier seuil,

le démarreur étant alimenté par une première batterie d'une première tension nominale, la machine électrique étant alimentée par une seconde batterie d'une seconde tension nominale supérieure à la première tension nominale, la seconde batterie étant reliée au démarreur par l'intermédiaire d'un convertisseur de tension, et le moyen de sélection active le convertisseur de tension de façon que la seconde batterie alimente le démarreur avec la première batterie si la température représentative est inférieure au premier seuil et supérieure à un second seuil inférieur au premier seuil, et désactive le convertisseur de tension si la température représentative est inférieure au second seuil.

Selon un mode de réalisation de l'invention, un moyen de détection est adapté à transmettre au moyen de sélection un signal indiquant si le démarreur est opérationnel, le moyen de sélection sélectionnant systématiquement la machine électrique pour entraîner l'arbre moteur lors du démarrage du moteur thermique si le signal émis par le moyen de détection indique que le démarreur n'est pas opérationnel.

Selon un mode de réalisation de l'invention, le moteur thermique est refroidi par la circulation d'un liquide de refroidissement, la température représentative étant la température du liquide de refroidissement

Cet objet, ces caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon schématique, un exemple d'architecture d'un véhicule hybride série ; et
la figure 2 représente un exemple de réalisation, sous forme d'organigramme, du procédé selon l'invention de démarrage de moteur thermique.

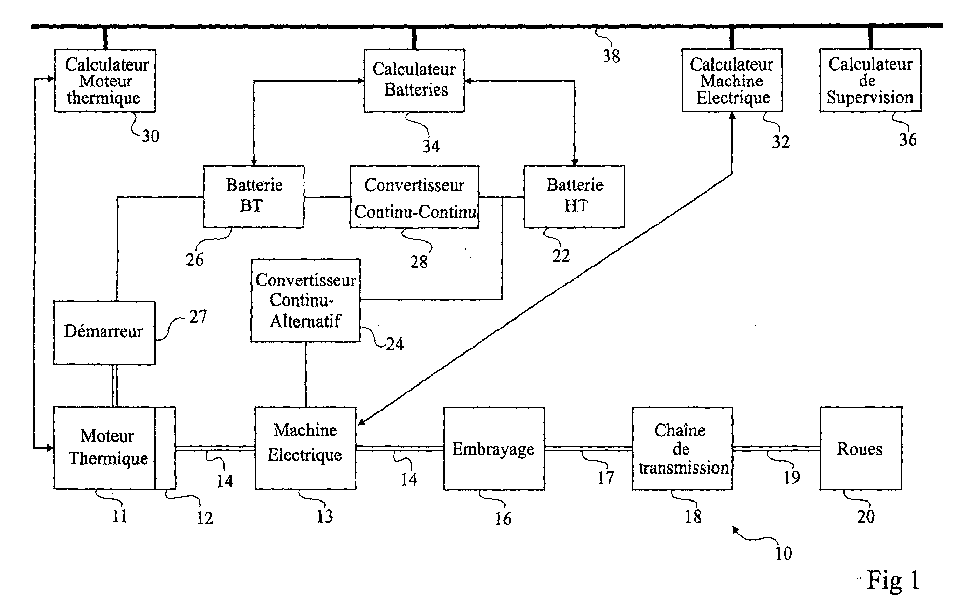

Comme cela est représenté sur la figure 1, le véhicule hybride 10 comprend un moteur thermique 11 associé à un volant moteur 12. Un système de refroidissement, non représenté, assure le refroidissement du moteur thermique 11 par la circulation d'un fluide de refroidissement, par exemple de l'eau. Une machine électrique 13 est couplée sur l'arbre moteur 14. L'arbre moteur 14 est relié à un embrayage 16 qui, lorsqu'il est actionné, couple l'arbre moteur 14 à un arbre d'entrée 17 d'une chaîne de transmission 18. La chaîne de transmission 18 comprend, par exemple, une boîte de vitesses et un pont diviseur. La vitesse de rotation de l'arbre de sortie 19 de la chaîne de transmission 18 correspond à la vitesse de rotation de l'arbre d'entrée 17 multipliée par le rapport de réduction global de la chaîne 18. L'arbre de sortie 19 est relié aux roues 20 du véhicule. La boîte de vitesses peut être une boîte de vitesses manuelle classique, une boîte robotisée, une boîte automatique, une boîte continûment variable, etc. L'embrayage 16 peut, selon le type de boîte de vitesses, être automatique ou actionné par le conducteur. Le véhicule hybride 10 peut comporter sur la ligne d'échappement pour l'évacuation des gaz d'échappement du moteur thermique 11 un catalyseur non représenté.

La machine électrique 13 est reliée à une batterie haute tension 22 par l'intermédiaire d'un convertisseur continu-alternatif 24. La machine électrique 13 peut fonctionner comme un alternateur et charger la batterie haute tension 22 et fournir le réseau de bord, ou bien fonctionner comme un moteur électrique alimenté par la batterie haute tension 22 pour entraîner l'arbre moteur 14.

La batterie haute tension 22 est reliée à une batterie basse tension 26 par l'intermédiaire d'un convertisseur continu-continu 28. Le convertisseur continu-continu 28 peut être adapté à limiter l'intensité du courant fourni par la batterie haute tension 22. Cette limite peut être fonction des voltages et des températures des batteries 22, 26. La batterie basse tension 26 alimente un réseau de bord à basse tension du véhicule (non représenté) pour l'alimentation d'équipements classiques du véhicule 10 (par exemple la climatisation, l'essuyage, le chauffage, etc.). La batterie basse tension 26 alimente également un démarreur classique 27 pouvant entraîner l'arbre moteur 14. La batterie haute tension 22 peut éventuellement alimenter un réseau de bord à haute tension pour l'alimentation de certains équipements spécifiques du véhicule qui demandent une puissance élevée, comme par exemple des résistances de chauffage, une direction assistée, le chauffage électrique du catalyseur, etc. A titre d'exemple, la batterie basse tension 26 présente une tension moyenne de 12 volts, et la batterie haute tension 22 est une batterie de puissance de type NimH (Nickel-métal-Hydrure) de tension moyenne de 42 volts.

Le véhicule hybride 10 comporte plusieurs calculateurs 30, 32, 34, 36 qui commandent les différents éléments du véhicule hybride. Les calculateurs 30, 32, 34, 36 peuvent échanger entre eux des données par l'intermédiaire d'un bus d'échange de données 38.

Un calculateur 30 de contrôle du moteur thermique 11 est adapté à commander par exemple l'injection dans les chambres de combustion du moteur thermique 11 à partir de paramètres de fonctionnement du moteur thermique 11.

Un calculateur 32 de contrôle de la machine électrique 13 est adapté à transmettre à la machine électrique 13 une commande de couple à partir de paramètres de fonctionnement de la machine électrique 13.

Un calculateur 34 de contrôle des batteries 22, 26 est adapté, à partir de paramètres de fonctionnement des batteries haute tension 22 et basse tension 26, à, entre autres, émettre un signal d'alarme lorsque certaines conditions de bon fonctionnement des batteries 22, 26 ne sont pas remplies.

Un calculateur 36 de supervision peut commander les calculateurs 30, 32, 34 dans le but d'assurer des prestations particulières dont certaines sont décrites par la suite. En particulier, le calculateur 36 de supervision peut commander le calculateur 32 de contrôle de la machine électrique 13 pour activer ou désactiver le convertisseur continu-continu 28 et le convertisseur continu-alternatif 24 de la machine électrique 13. Le calculateur 36 de supervision reçoit en outre un signal émis par le calculateur 30 de contrôle du moteur thermique 11 représentatif de la température de l'eau de refroidissement du moteur thermique 11, appelée par la suite température d'eau moteur. De préférence, la température d'eau moteur est mesurée selon le sens de circulation de l'eau en aval du moteur thermique 11. Le calculateur 36 de supervision reçoit en outre un signal indiquant qu'un démarrage du moteur thermique 11 est demandé par le conducteur. Un tel signal peut être, par exemple, émis par un capteur indiquant qu'une clé actionnée par le conducteur est dans une position spécifique, ou un bouton de démarrage présent sur le poste de conduite du véhicule dans le cas d'un véhicule sans clé, etc.

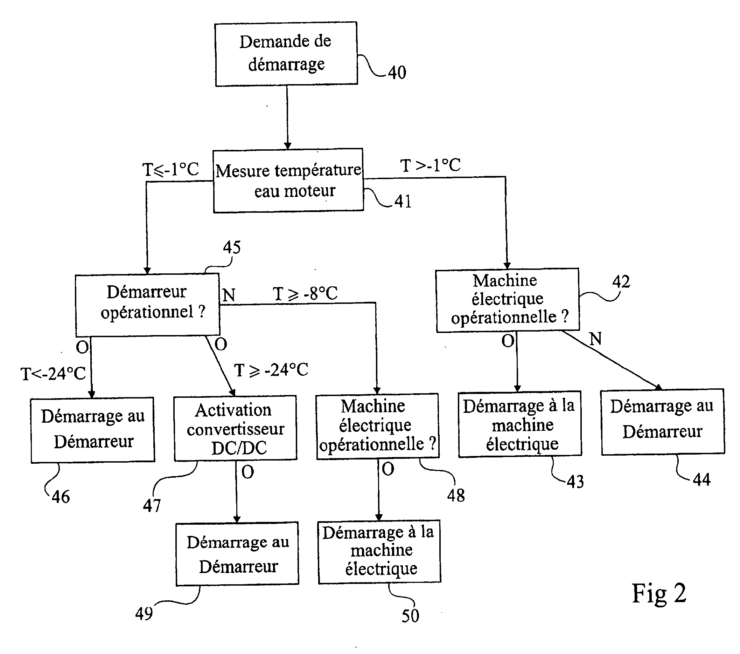

La figure 2 représente les différentes étapes d'un mode de réalisation du procédé selon l'invention de démarrage du moteur thermique 11 du véhicule 10.

A l'étape 40, le calculateur de supervision 36 détecte une action exercée sur la clé du véhicule par le conducteur.

A l'étape 41, le calculateur de supervision 36 détermine la température d'eau moteur et la compare à une température de seuil.

A l'étape 42, correspondant à une température d'eau moteur supérieure à une température de seuil de -1°C, le calculateur de supervision 36 détermine si la machine électrique 13 est opérationnelle. Dans l'affirmative, le procédé continue à l'étape 43 et dans la négative à l'étape 44.

A l'étape 43, le calculateur de supervision 36 commande le démarrage du moteur thermique 11 au moyen de la machine électrique 13, alimentée par la batterie haute tension 22, qui entraîne en rotation l'arbre moteur 14. La commande de la machine électrique 13 est obtenue par une consigne de couple fournie par le calculateur 36 de supervision, en fonction d'une consigne de régime de la machine thermique 11 fournie par le calculateur 30 moteur thermique. A titre d'exemple, la machine électrique 13 entraîne en rotation l'arbre 14 du moteur thermique 11 jusqu'à un régime déterminé. A ce moment, le calculateur 30 moteur thermique commande une injection maximale, puis régule l'injection pour que le régime du moteur thermique 11 se stabilise à un régime de ralenti.

A l'étape 44, le calculateur de supervision 36 commande le démarrage du moteur thermique 11 au moyen du démarreur 27.

A l'étape 45, correspondant à une température d'eau moteur inférieure ou égale à -1°C, le calculateur de supervision 36 détermine si le démarreur 27 est opérationnel. Dans l'affirmative, et si la température d'eau moteur est inférieure à une température de seuil de -24°C, le procédé continue à l'étape 46. Dans l'affirmative, et si la température d'eau moteur est supérieure ou égale à -24°C, le procédé continue à l'étape 47. Dans la négative, et si la température d'eau moteur est supérieure à une température de seuil de -8°C, le procédé continue à l'étape 48. Dans la négative, et si la température d'eau moteur est inférieure à une température de seuil de -8°C, il n'y a pas de tentative de démarrage.

A l'étape 46, le calculateur de supervision 36 commande le démarrage du moteur thermique 11 à l'aide du démarreur 27. Le convertisseur continu-continu 28 est désactivé. Le démarreur 27 est donc alimenté uniquement par la batterie basse tension 26.

A l'étape 47, le calculateur de supervision 36 commande le calculateur machine électrique 32 pour activer le convertisseur continu-continu 28 entre les batteries haute tension 22 et basse tension 26 et détermine si l'activation du convertisseur continu-continu 28 a réussi. Dans l'affirmative, le procédé continue à l'étape 49. Dans la négative, le démarrage a lieu sans assistance de la batterie haute tension 22.

A l'étape 49, le calculateur de supervision 36 effectue le démarrage du moteur thermique 11 au moyen du démarreur 27. Le convertisseur continu-continu 28 est activé. Le démarreur 27 est alimenté par la batterie basse tension 26 qui peut recevoir de l'énergie électrique fournie par la batterie haute tension 22. A titre d'exemple, le démarreur 27 entraîne en rotation l'arbre 14 du moteur thermique 11 jusqu'à un régime déterminé. A ce moment, le calculateur 30 moteur thermique commande une injection maximale, puis régule l'injection pour que le régime du moteur thermique 11 se stabilise à un régime de ralenti.

A l'étape 48, le calculateur de supervision 36 détermine si la machine électrique 13 est opérationnelle. Dans l'affirmative, le procédé continue à l'étape 50. Dans la négative, il n'y a pas de tentative de démarrage.

A l'étape 50, le calculateur de supervision 36 commande le démarrage de la machine thermique 11 à l'aide de la machine électrique 13. La machine électrique 13 est alimentée uniquement par la batterie haute tension 22. De façon classique, si au bout d'une durée déterminée, le moteur thermique 11 n'a pas démarré (ceci pouvant être détecté par une mesure du régime du moteur thermique 11), le calculateur de supervision 36 fournit au conducteur, par l'intermédiaire d'une interface présente sur le tableau de bord, un signal indiquant que le démarrage du moteur thermique 11 a échoué.

La température d'eau moteur thermique 11 est utilisée comme critère de sélection de l'organe de démarrage du moteur thermique 11 puisqu'elle est relativement peu sensible aux brusques variations de température extérieure, et est représentative de la température réelle du moteur thermique 11.

La présente invention permet d'assurer les conditions les plus favorables pour le démarrage du moteur thermique 11 d'un véhicule hybride série 10 malgré des températures de moteur thermique 11 basses.

Dans le cas où la température est comprise entre -24°C et -1°C, on considère que les dégradations des propriétés de la batterie haute tension 22 et de la machine électrique 13 et l'augmentation du couple résistif du moteur thermique 11 sont telles qu'un démarrage du moteur thermique 11 avec la machine électrique 11 risque d'échouer. Le démarrage est alors assuré par le démarreur 27, et la batterie haute tension 22 assiste la batterie basse tension 26, par l'intermédiaire du convertisseur continu-continu 28, pour l'alimentation du démarreur 27. Bien que les propriétés de la batterie haute tension 22 soient dégradées à des températures aussi faibles, l'intensité demandée à la batterie haute tension 22, pour l'alimentation du démarreur 27, reste très inférieure à celle fournie par la batterie basse tension 26, étant donné les rapports des tensions aux bornes du convertisesur continu-continu 24. A titre d'exemple, pour un rapport de tension d'environ 4, si le besoin en courant du démarreur 27 est de l'ordre de 200 A à ses bornes, le courant fourni par la batterie basse tension 26 sera de l'ordre de 100 A et celui fourni par la batterie haute tension 22 sera de l'ordre de 25 A.

Selon une variante de l'invention, on met en oeuvre un cycle à hystérésis autour des températures de seuil pour éviter un fonctionnement instable du calculateur de supervision 36 lorsque la température d'eau moteur est voisine d'une température de seuil. Le démarreur 27 est alors sélectionné pour le démarrage du moteur thermique 11 lorsque la température diminue, par exemple, en deçà de -3°C et la machine électrique 13 est sélectionnée lorsque la température augmente au delà de +1°C. De façon analogue, le convertisseur continu-continu 28 n'est pas activé lorsque la température diminue, par exemple, en deçà de -24°C, et le convertisseur continu-continu 28 est activé lorsque la température augmente au delà de -21°C. En outre, lors d'un dysfonctionnement du démarreur 27, le démarrage est forcé à la machine électrique 13 lorsque la température augmente, par exemple, au delà de -5°C, et il n'y a pas de tentative de démarrage lorsque la température diminue en deçà de -9°C.

Selon une variante de l'invention, le calculateur 34 de contrôle des batteries 22, 26 émet un signal d'alarme, sur le bus de données 38, lorsque la température de la batterie haute tension 22 est inférieure à une température déterminée et/ou lorsque l'état de charge de la batterie haute tension 22 est inférieur à un état de charge déterminé. De plus, le calculateur machine électrique 32 émet une alarme, sur le bus de données 38, lors d'un dysfonctionnement de la machine électrique 13. Avant l'étape 41, le calculateur de supervision 36 vérifie s'il a reçu des alarmes du calculateur 34 batteries ou du calculateur 32 machine électrique. Dans la négative, le procédé continue à l'étape 41 comme cela a été précédemment décrit. Dans l'affirmative, le moteur thermique 11 est démarré avec le démarreur 27 alimenté par la batterie basse tension 26. Si le démarreur n'est pas opérationnel, alors aucune tentative de démarrage du moteur thermique 11 n'est réalisée, et le calculateur de supervision 36 fournit au conducteur un signal indiquant que le démarrage du moteur thermique 11 a échoué.

Bien entendu, la présente invention est susceptible de diverses variantes et modifications qui apparaîtront à l'homme de l'art. En particulier, on a décrit un certain nombre de calculateurs distincts recevant chacun des signaux particuliers et réalisant chacun des actions spécifiques. Il est clair que ce nombre pourrait être différent, un unique calculateur pouvant, par exemple, remplir le rôle de plusieurs calculateurs précédemment décrits.

## Revendications

1. Procédé de démarrage d'un moteur thermique (11) d'un véhicule hybride (10), ledit moteur thermique étant susceptible de fournir un couple moteur à un arbre moteur (14) relié aux roues (20) du véhicule, une machine électrique (13) étant couplée à l'arbre moteur et fournissant un couple d'assistance à l'arbre moteur de même sens ou opposé au couple moteur, comportant les étapes suivantes :
- comparer une température représentative de la température du moteur thermique à un premier seuil ; et
- entraîner le moteur thermique par la machine électrique, si la température représentative est supérieure au premier seuil, ou par un démarreur (27) distinct de la machine électrique, si la température représentative est inférieure au premier seuil ;
- comparer la température représentative à un second seuil, inférieur au premier seuil ; et
- alimenter le démarreur (27) par une première batterie (26), si la température représentative est inférieure au second seuil, ou par l'association de la première batterie et d'une seconde batterie (22), normalement dédiée à l'alimentation de la machine électrique (13), si la température représentative est comprise entre le second seuil et le premier seuil.

2. Procédé selon la revendication 1, dans lequel le premier seuil dépend du sens de variation de la température représentative.

3. Procédé selon la revendication 1, dans lequel le second seuil dépend du sens de variation de la température représentative.

4. Procédé selon la revendication 1, dans lequel la température représentative est la température d'un liquide de refroidissement du moteur thermique (11).

5. Véhicule hybride (10) comprenant un moteur thermique (11) susceptible de fournir un couple moteur à un arbre moteur (14) relié aux roues (20) du véhicule, et une machine électrique (13) couplée à l'arbre moteur et fournissant un couple d'assistance audit arbre moteur de même sens ou opposé au couple moteur, comportant un démarreur (27) pouvant être couplé temporairement à l'arbre moteur, un moyen de détermination d'une température représentative de la température du moteur thermique, et un moyen de sélection (36) adapté à sélectionner, pour entraîner l'arbre moteur lors du démarrage du moteur thermique, la machine électrique si la température représentative est supérieure à un premier seuil, ou le démarreur si la température représentative est inférieure au premier seuil, et **caractérisé en ce que** le démarreur (27) est alimenté par une première batterie (26) d'une première tension nominale, la machine électrique étant alimentée par une seconde batterie (22) d'une seconde tension nominale supérieure à la première tension nominale, la seconde batterie étant reliée au démarreur par l'intermédiaire d'un convertisseur de tension (28), le moyen de sélection (36) activant le convertisseur de tension de façon que la seconde batterie alimente le démarreur avec la première batterie si la température représentative est inférieure au premier seuil et supérieure à un second seuil inférieur au premier seuil, et désactivant le convertisseur de tension si la température représentative est inférieure au second seuil.

6. Véhicule hybride (10) selon la revendication 5, dans lequel un moyen de détection est adapté à transmettre au moyen de sélection (36) un signal indiquant si le démarreur (27) est opérationnel, le moyen de sélection sélectionnant systématiquement la machine électrique (13) pour entraîner l'arbre moteur (14) lors du démarrage du moteur thermique (11) si le signal émis par le moyen de détection indique que le démarreur n'est pas opérationnel.

7. Véhicule hybride (10) selon la revendication 5, dans lequel le moteur thermique (11) est refroidi par la circulation d'un liquide de refroidissement, la température représentative étant la température du liquide de refroidissement.

## Claims

1. Method for starting a heat engine (11) of a hybrid vehicle (10), the said heat engine being capable of providing a driving torque to a driveshaft (14) connected to the wheels (20) of the vehicle, an electric machine (13) being coupled to the driveshaft and providing an assisting torque to the driveshaft in the same direction or opposite to the drive torque, comprising the following steps:
- comparing a temperature representative of the temperature of the heat engine with a first threshold; and
- driving the heat engine via the electric machine, if the representative temperature is higher than the first threshold, or via a starter (27) distinct from the electric machine, if the representative temperature is below the first threshold;
- comparing the representative temperature with a second threshold, lower than the first threshold; and
- supplying the starter (27) via a first battery (26), if the representative temperature is below the second threshold, or via the association of the first battery and a second battery (22), normally dedicated to supplying the electric machine (13), if the representative temperature is between the second threshold and the first threshold.

2. Method according to Claim 1, in which the first threshold depends on the direction of change of the representative temperature.

3. Method according to Claim 1, in which the second threshold depends on the direction of change of the representative temperature.

4. Method according to Claim 1, in which the representative temperature is the temperature of a liquid for cooling the heat engine (11).

5. Hybrid vehicle (10) comprising a heat engine (11) capable of providing a driving torque to a driveshaft (14) connected to the wheels (20) of the vehicle, and an electric machine (13) coupled to the driveshaft and providing an assisting torque to the said driveshaft in the same direction or opposite to the drive torque, comprising a starter (27) capable of being temporarily coupled to the driveshaft, a means for determining a temperature representative of the temperature of the heat engine, and a selection means (36) suitable for selecting, in order to drive the driveshaft during the starting of the heat engine, the electric machine if the representative temperature is higher than a first threshold, and the starter if the representative temperature is below the first threshold, and **characterized in that** the starter (27) is supplied by a first battery (26) with a first nominal voltage, the electric machine being supplied by a second battery (22) at a second nominal voltage higher than the first nominal voltage, the second battery being connected to the starter via a voltage converter (26), the selection means (36) activating the voltage converter so that the second battery supplies the starter with the first battery if the representative temperature is below the first threshold and above a second threshold below the first threshold, and deactivating the voltage converter if the representative temperature is below the second threshold.

6. Hybrid vehicle (10) according to Claim 5, in which a detection means is suitable for transmitting to the selection means (36) a signal indicating whether the starter (27) is operational, the selection means systematically selecting the electric machine (13) in order to drive the driveshaft (14) when the heat engine (11) is started if the signal transmitted by the detection means indicates that the starter is not operational.

7. Hybrid vehicle (10) according to Claim 5, in which the heat engine (11) is cooled by the circulation of a cooling liquid, the representative temperature being the temperature of the cooling liquid.

## Patentansprüche

1. Verfahren zum Anlassen eines Verbrennungsmotors (11) eines Hybridfahrzeugs (10), wobei der Verbrennungsmotor ein Antriebsdrehmoment an eine mit den Rädern (20) des Fahrzeugs verbundene Antriebswelle (14) liefern kann, wobei eine elektrische Maschine (13) mit der Antriebswelle gekoppelt ist und an die Antriebswelle ein Unterstützungsmoment in der gleichen Richtung wie das oder entgegengesetzt zum Antriebsdrehmoment liefert, das die folgenden Schritte aufweist:
- Vergleich einer für die Temperatur des Verbrennungsmotors repräsentativen Temperatur mit einem ersten Schwellwert; und
- Antrieb des Verbrennungsmotors durch die elektrische Maschine, wenn die repräsentative Temperatur höher ist als der erste Schwellwert, oder durch einen von der elektrischen Maschine getrennten Anlasser (27), wenn die repräsentative Temperatur geringer ist als der erste Schwellwert;
- Vergleich der repräsentativen Temperatur mit einem zweiten Schwellwert geringer als der erste Schwellwert; und
- Speisen des Anlassers (27) durch eine erste Batterie (26), wenn die repräsentative Temperatur geringer ist als der zweite Schwellwert, oder durch die Vereinigung der ersten Batterie und einer zweiten Batterie (22), die normalerweise für die Speisung der elektrischen Maschine (13) bestimmt ist, wenn die repräsentative Temperatur zwischen dem zweiten Schwellwert und dem ersten Schwellwert liegt.

2. Verfahren nach Anspruch 1, bei dem der erste Schwellwert von der Änderungsrichtung der repräsentativen Temperatur abhängt.

3. Verfahren nach Anspruch 1, bei dem der zweite Schwellwert von der Änderungsrichtung der repräsentativen Temperatur abhängt.

4. Verfahren nach Anspruch 1, bei dem die repräsentative Temperatur die Temperatur einer Kühlflüssigkeit des Verbrennungsmotors (11) ist.

5. Hybridfahrzeug (10), das einen Verbrennungsmotor (11), der ein Antriebsdrehmoment an eine mit den Rädern (20) des Fahrzeugs verbundene Antriebswelle (14) liefern kann, und eine elektrische Maschine (13) enthält, die mit der Antriebswelle gekoppelt ist und ein Unterstützungsmoment an die Antriebswelle in der gleichen Richtung wie das oder entgegengesetzt zum Antriebsdrehmoment liefert, das einen Anlasser (27), der vorübergehend mit der Antriebswelle gekoppelt werden kann, eine Einrichtung zur Bestimmung einer für die Temperatur des Verbrennungsmotors repräsentativen Temperatur, und eine Auswahleinrichtung (36) aufweist, die geeignet ist, um für den Antrieb der Antriebswelle beim Anlassen des Verbrennungsmotors die elektrische Maschine zu wählen, wenn die repräsentative Temperatur über einem ersten Schwellwert liegt, oder den Anlasser zu wählen, wenn die repräsentative Temperatur unter dem ersten Schwellwert liegt, und **dadurch gekennzeichnet, dass** der Anlasser (27) von einer ersten Batterie (26) mit einer ersten Nennspannung gespeist wird, während die elektrische Maschine von einer zweiten Batterie (22) mit einer zweiten Nennspannung gespeist wird, die höher ist als die erste Nennspannung, wobei die zweite Batterie mit dem Anlasser über einen Spannungswandler (28) verbunden ist, wobei die Auswahleinrichtung (36) den Spannungswandler so aktiviert, dass die zweite Batterie den Anlasser mit der ersten Batterie speist, wenn die repräsentative Temperatur geringer als der erste Schwellwert und höher als ein zweiter Schwellwert geringer als der erste Schwellwert ist, und den Spannungswandler deaktiviert, wenn die repräsentative Temperatur geringer als der zweite Schwellwert ist.

6. Hybridfahrzeug (10) nach Anspruch 5, bei dem eine Erfassungseinrichtung geeignet ist, um an die Auswahleinrichtung (36) ein Signal zu übertragen, das anzeigt, ob der Anlasser (27) betriebsbereit ist, wobei die Auswahleinrichtung systematisch die elektrische Maschine (13) für den Antrieb der Antriebswelle (14) beim Anlassen des Verbrennungsmotors (11) auswählt, wenn das von der Erfassungseinrichtung gesendete Signal anzeigt, dass der Anlasser nicht betriebsbereit ist.

7. Hybridfahrzeug (10) nach Anspruch 5, bei dem der Verbrennungsmotor (11) durch die Zirkulation einer Kühlflüssigkeit gekühlt wird, wobei die repräsentative Temperatur die Temperatur der Kühlflüssigkeit ist.
